# EUROPEAN PATENT APPLICATION

(11) **EP 2 299 144 A1**
(43) Date of publication of application: **23.03.2011**
(21) Application number: 09735106.8
(22) Date of filing: 13.02.2009
(51) Int. Cl.: F16H 29/16

(54) **CONTINUOUSLY VARIABLE GEARBOX**

(30) Priority: 15.02.2008 ES 200800413
(71) Applicant: Varko Automatismos, S.L., 28020 Madrid (ES)
(72) Inventor: DELGADO GARCÍA, Antonio, 28925 Madrid (ES)
(86) International application number: PCT/ES2009/070027
(87) International publication number: WO 2009/130354

(57) **Abstract**

The invention relates to a continuously variation gearbox formed by a casing (1) containing opposing input (2) and output (3) shafts, so that the gearbox can operate in both directions, such that the input shaft (2) is associated with a double constant velocity joint (4) provided with a sliding axle (5) which transmits movement to a head (6) positioned facing a disc (7) that rotates about the output shaft (3). The head (6) can move radially on the surface of the disc (7) with the aid of a carriage (8) and said head contains a plurality of equiangularly distributed pressure columns provided with driving bolts that emerge selectively under the action of a series of wheels mounted on a fork which tilts and comes into contact with one of said pressure columns, thereby causing the aforementioned driving bolt to emerge and generating the movement of the disc (7).

## Description

### PURPOSE OF THE INVENTION.

The present invention refers to a gear box of the type designed to produce a continuous variation of the speed rate between the input and output shafts.

The purpose of the invention is to make available a gear box with a more simple structure than that conventional gear boxes, with less weight, manufacturing cost and engine consumption.

The invention is located within the scope of the machinery and more specifically in the area of mechanisms destined to the vehicle.

### INVENTION BACKGROUND

Numerous models of automatic transmissions are well known at the present. In these, there are a great number of helicoidal gears that mesh progressively with one another in linear sequence. Resulting in multiple transmission ratios in a progressive way. Although In a great deal of these gear boxes, it cannot be considered that the speed variation is obtained in a linear way, due to changes produced when changing from one ratio to another.

These gear boxes, because of their own nature and design are very heavy and cumbersome, by incorporating a large number of heleicodal gears which have considerable manufacturing costs end design structure that affects final cost.

### INVENTION DESCRIPTION

The gear box proposed by the inventor resolves in a wholly satisfactory manner the problems mentioned earlier by the application of a totally new solution, which allows the substantial reduction not only of the weights but also the size, as well as the manufacturing cost associated to this.

To achieve this, the gear box resulting from this invention is built of using housing. As usual, is incorporates an input and output shafts, although the unit can operate In reverse. Thus the output shaft will be the input shaft and vice versa input shaft which is associated to a double homocinetic joint and which has attached a head disc which is confronted normal face to face to a disc whose diameter is substantial larger than the head disc and integrated in the already mentioned output shaft.

The above mentioned head disc is assisted by a car, through ball bearings or wheels, in such a way that through the displacement of this car already mentioned is parallel to the disc. The carrier takes places from the disc center to its periphery parallel to the radius, so the variation of ratio occurred smoothly without scales and without, consequently, interruption of power flow.

The head disc incorporates a series of pressure columns, distributed equialangulary and will become activated sequentially, so that this operation of each column will result in the emergence of the corresponding drive pin associated to this same column in a way that the emergence of the drive pin from the head disc makes it inter into contact with the disc, so that by rotating, this already mentioned head disc at the same angular speed as the input shaft, its drive pin causes an angular displacement of the disc.

Drive pin activation occurred in micro seconds. Drive pin emergence sequentially as consequence of a pressure system and mechanical device that basically consist in a pressure column, formed by three different pieces, in such away, that when the drive pin coupled to the disc, when the load changes, drive pin retracts automatically, emerging another drive pin that couples to the disc. That occurs in micro seconds. So there is always only one drive pin coupled to the disc let's say in a similar way as a person when walking.

In this way and through the activation of the pressure columns, that is, the emergence and retraction of the pins is performed at any moment along an arch of a pre-established length, in accordance with the position of the head disc in respect of the center of said disc, a different transmission rate will be obtained. This will be possible to change in linear fashion, allowed by the displacement of the car associated to this head disc equally in linear fashion.

In a more concrete way, the pin activating mechanism consist of a fork over the car, fitted with a pair of wheels, the fork can tip and is cam associated to a hydraulic piston. Activating this piston, wheels puts pressure tangentially on the head disc by the area corresponding to the arch where the disc drag occurs, so wheels enter into contact sequentially with some wedges associated to each column. Which become momentarily displaced by these at the same time they also displace a pusher which is connected to the corresponding drive pin.

So, when the piston releases pressure no action occurs.

There is a clutch effect, produced by a existing composed of sliding peripheral rings and fixed to the disc. The clutch effect is increased by installing a electro valve controlled electronically.

### DRAWINGS

Attached drawings show clearly what is being described above.
Figure 1. Shows a schematic representation in perspective, of a continuous variation gear box, drawn in accordance with the objective of the present invention, with the housing partially sectioned off.
Figure 2. Shows an illustration of a sectioned gear box belonging to figure 1.
Figure 3. Shows the set composed by piston and head disc.
Figure 4. Shows the head disc face.

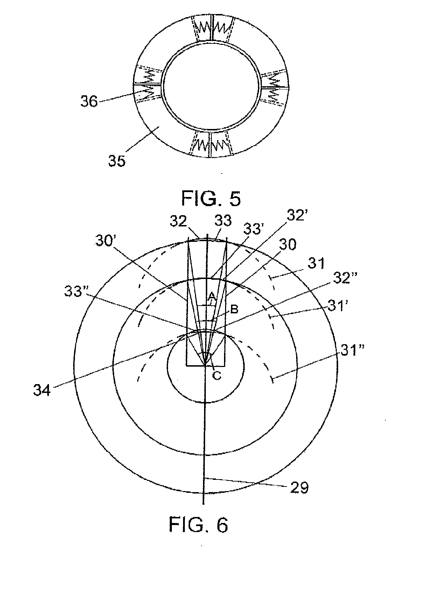

Figure 5. Shows the ring associated with de clutch effect.
Figure 6. Shows both coupled drive pin and emerging drive pin, schematically, function.

### INVENTION PRIORITY REALIZATION

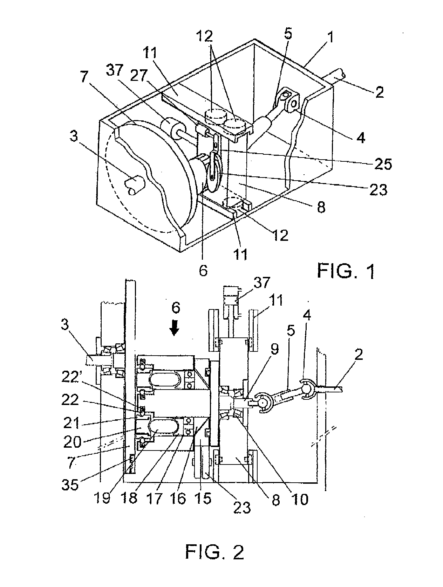

An examination of the enclosed drawings and specially figure 1 it can be observed how from conventional layout of a gear box in which there is a housing (1), An input shaft (2) and an output shaft (3), in the gear box we preconize, the input shaft, which as we have already said can be also output shaft depending on the connection of the motive rant is associated to a double homocinetic joint (4), provided with a shaft (5) that transmit movement to a head disc (6) which is facing a disc (7) and whose rotating center is coincident with the output shaft (3).

Considering what has been explained above and the drawings attached, the device function is clear.

The role of the pressure columns is to become attached unitarily during a rotation, in this case, 45º of the head disc (6) to the main disc (9), in such a way that once the rotation is completed, automatically the next column sees to it to attach itself again to the disc and so on, obtaining a continuous movement without shocks on the part of the disc (7) and consequently of the output shaft.

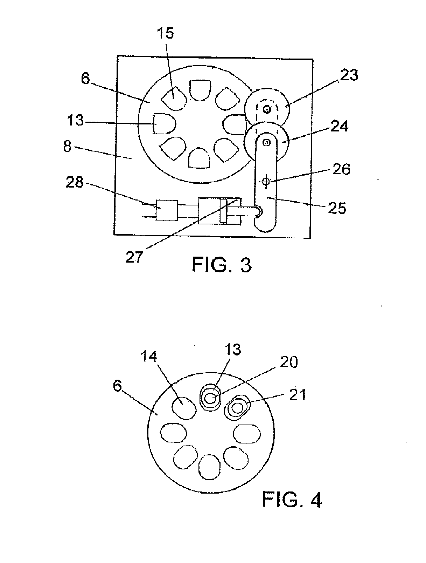

For this, as it can be seen on figure 2 to 4, the head disc has eight grooves (14) which carry the pressure columns (13), each one of these has a wedge (15) which is powered by a mechanism to be described later on, which displaces a complementary wedge (16) on which rests a roller bearing (17) which acts as a base (18) on which rests a pusher (19) that causes a drive pin (20) to displace, emerging from this head disc and comes into contact with the disc (7) which it moves. This pin in a rest position has a tendency to retract due to the action of some bushing (21) associated to this with the help of some latches (12) and their corresponding springs (22) The mechanism that activates the wedges (15) consists of two pairs of wheels (23 + 24) mounted on an asymmetric fork (25), the one shown in figure number 3 tilts over a shaft (26). This fork is connected to the other end by a hydraulic cylinder (27) controlled by an electro valve (28) who is connected to a pressure source. All these elements are mounted on the car (8). In this manner, the lack of pressure on the part of the electro valve will result in a neutral position or disconnection of the cinematic chain.

On figure (6) there appear represented over a vertical shaft (29) through passes the rotation center of the disc (7), two parallel lines to this (30'-30") corresponding to the area of action of the wheels (23-24) over the pressure columns (13), or in other words, for different positions (31-31'-31") of the head disc (6), the trajectory (32-32'-32") point of emergence of the drive pin (20) which causes the drive to displace (33-33'-33") corresponding to respective rotation angles (A-B-C) for each position of the head disc (6) assisted by the car (8) which will result in a higher angular velocity when close it gets to the center of this mentioned disc (7), this when both coincide, the transmission rate would be (1:1).

As can be seen in the already mentioned figure (6), the play (34) that is produced in between the disc rotation (7) and that of the head disc (6) is absorbed by this latter, concretely by the drive pin (20) and bushing (21) through the grooves (14) of the head disc.

Lastly, it should be highlighted that in order to achieve a clutch effect, the disc (7) incorporates in its perimetral and more external zone a sliding ring (35) over this coplanary setting continuity with the contact surface of this already mentioned disc with the head disc (6) that through pairs of springs (36) is attaches to it, obtaining an oscillating, smooth and flexible action of the ring over the disc allowing the obtention of a clutch effect. Because of the lower transmission rate plus the adequate control of the electro valve (28) being subject to an impulse train by electronic control, which produces an intermittent pressure interruption of the hydraulic cylinder (27) over the forks (25).

## Claims

1. CONTINUOUSLY VARIATION GEARBOX, which being of the type enclosed by a housing (1) into which are fitted opposite to each other an input shaft (2) and output shaft (3). It is **characterized by** being associated to a double homocinetic joint(4) fitted with a sliding shaft(5) that transmits movement to a head disc(6) which faces a disc (7), whose rotating shaft coincides with the output shaft (3), head disc (6), which moves radially over the surface of the disc(7),with the help of a car in whose interior there are multiple pressure columns equiangulary distributed, provided with drive pins (20) which enlarge selectively by the action of a series of wheels (23) and (24) mounted over a fork (25) that pivots over a shaft (25),coming into contact with one of the pressure columns, causing the emerging drive pin. This fork which is associated by means of controlling its tipping , with the particularity that the drive pins(20) are placed in such a way that on emerging from the head disc (6), these come into contact with the disc (7) causing these disc to initiate its movement.

2. CONTINUOUSLY VARIATION GEARBOX in accordance with CLAIM (1) one, **characterized by** the presence of participation of a wedge (5) in the pressure columns, moved by the wheels of the fork (25), wedge (15), which displaces a complementary wedge (16) on which rests same bearings (17) that serve as a base (16) for a pusher (19) that causes the drive pin to emerge(20).

3. CONTINUOUSLY VARIATION GEARBOX in accordance with CLAIM (1) one and CLAIM (2) two **characterized** du to each pin (20) incorporates ways to retract itself during idle periods through some bushings (21) related to it, fasteners (22) and their corresponding springs (22')

4. CONTINUOUSLY VARIATION GEARBOX in accordance with previous claims, **characterized by** the fact that each pressure columns allocated in groove (14) of the load disc resulting in a slight radial clearance in between the two.

5. CONTINUOUSLY VARIATION GEARBOX in accordance with CLAIM (1) one and CLAIM (2) two, the means to regulate the fork (25) materialize in a hydraulic piston (27') controlled by an electro valve (28) connected to a pressure source

6. CONTINUOUSLY VARIATION GEARBOX in accordance with CLAIM (1) one **characterized** due to the disc (7) incorporates in its perimetral and most external zone A sliding ring (35) (?????), establishing continulty with the contact surface of this disc and the head disc, ring who through pairs of springs (36) it becomes attached to the disc (7) similar to a clutch mechanism, which is controlled with the intervention of an electro valve controlled electronically.

7. CONTINUOUSLY VARIATION GEARBOX in accordance with CLAIM (1) one, **characterized by** the fact that the swing shaft of the head disc turns through a series of roller bearing situated in the vehicle (8) which is able to shift on a plane parallel to the surface of the disc (7) through guides (11) and the corresponding wheels (12) plus a hydraulic piston (37).
